# EUROPEAN PATENT SPECIFICATION

(11) **EP 0 715 391 B1**
(45) Date of publication and mention of the grant of the patent: **24.03.1999**
(21) Application number: 95118968.7
(22) Date of filing: 01.12.1995
(51) Int. Cl.: H02J 7/02

(54) **Environmentally controlled high power high frequency transmission cable for reductive charger**
Umweltkontrolliertes Hochleistung- und Hochfrequenzübertragungskabel für ein reduktives Ladegerät
Câble de transmission haute puissance, haute fréquence à environnement conditionné pour chargeur inductif

(30) Priority: 02.12.1994 US 348666
(43) Date of publication of application: 05.06.1996
(73) Proprietor: Hughes Electronics Corporation, El Segundo, California 90245-0956 (US)
(72) Inventor: Woody, George R., Redondo Beach, California 90277 (US); Hulsey, Stephen J., Los Angeles, California 90043 (US); Desai, Prakash, Troy, Michigan 48098 (US); Kosowski, Mark, Rochester Hills, Michigan 48309 (US); Tanzer, Herbert J., Folsom, California 95630 (US); Ramos, Sergio, Wilmimgton, California 90744 (US); Hall, John T., Woodland Hills, California 91364 (US); Bereisa, John, Bloomfield Hills, Michigan 48302 (US)
(74) Representative: Witte, Alexander, Dr.-Ing.

(56) References cited:
- EP-A- 0 043 511
- EP-A- 0 312 446
- WO-A-94/09544
- CONFERENCE RECORD OF THE 1994 INDUSTRY APPLICATIONS CONFERENCE - TWENTY-NINTH IAS ANNUAL MEETING, 2 - 5 OCTOBER 1994 DENVER, USA, pages 1049 - 1054, XP512494 KLONTZ ET AL 'an actively cooled 120 kw coaxial winding transformer for fast charging electric vehicles'
- PATENT ABSTRACTS OF JAPAN vol. 18, no. 341 (M-1629), 22 March 1994 & JP-A-06 082 181 (FUJIKURA LTD)

## Description

The present invention relates to a transmission cable system for use with an inductive charging system that transfers electric power from a power source to batteries of an electric vehicle, said cable system comprising a transmission cable comprising a plurality of conductors electrically coupled between the power source and the electric vehicle for coupling electrical power to the batteries.

Such a transmission cable system is known from WO 94/09544.

The present invention relates generally to inductive charging systems, and more particularly, to an environmentally controlled high power high frequency transmission cable system for use in such inductive charging systems.

The assignee of the present invention designs, develops and manufactures inductive battery charging systems for use in charging the propulsion batteries of electric vehicles. A typical inductive charging system is used to charge propulsion batteries of an electric vehicle. The inductive charging system includes a power source, a power inverter coupled to the power source, and a charge paddle that has a primary core and a primary winding coupled to the charge cable by means of an extendable charging cable. The charging cable is conventional in design and is not cooled. A charge port is disposed in the electric vehicle that has a secondary core and secondary windings, and a charge controller is coupled between the charge port and the propulsion batteries of the electric vehicle.

Conventional cable designs for use in inductive charging systems are bulky and heavy in order to keep the touch temperature of the cable reasonably low during charging. Typically, such cables have a relatively large diameter to provide for additional surface area and/or added thermal mass. Also, conventional high charge rate cables, whether they conduct AC or DC, require large amounts of copper to carry the current at a low cable touch temperature. Solid heavy cables are prone to stiffening under extreme temperature conditions. The stiffening occurs mainly in the dielectric materials that surround the copper conductors.

Conventional cable designs have not used liquid cooling for a charge cable. However, when a cable is used at very high power transmission rates, a limit is placed on the physical manageability of the cable whether the transferred power is DC, or in the worst case AC, unless the conductors are adequately cooled. In addition, under extremely low temperature conditions, the coolant that is pumped through the system becomes viscous and is difficult to pump.

Therefore, it is an objective of the present invention to provide for an environmentally controlled high power high frequency transmission cable system for use in inductive charging systems.

The above and other objectives are met by the transmission cable system, mentioned at the outset, wherein the transmission cable system further comprises a plurality of coolant channels surrounding the plurality of conductors that permit the flow of coolant therethrough, a cooling system and/or a heating system coupled to the plurality of coolant channels of the transmission cable for cooling and heating the coolant, respectively, and a pump coupled to the cooling system and/or to the heating system and to the plurality of coolant channels for pumping the coolant through the cooling system and/or the heating system and through the transmission cable.

Generally, in order to meet the above and other objectives, the present invention is a transmission cable system that comprises a transmission cable having a cooling channel that surrounds the conductors of the transmission cable with coolant. The cooling channel is coupled to heating and/or cooling or refrigeration systems that control the temperature of the coolant in all weather conditions and under all power transfer levels.

More specifically, the present invention is a transmission cable system for use with an inductive charging system that transfers electric power from a power source to propulsion batteries of an electric vehicle. The transmission cable is electrically coupled between the power source and an electric vehicle for coupling electrical power to the vehicle batteries. The cooling channel of the transmission cable is coupled to the heating and refrigeration systems and comprises a plurality of coolant channels that permit the flow of coolant between the heating and coolant/refrigeration systems and the inductive charging system that heats or cools the coolant flowing through the transmission cable, as required, when transferring electrical power to the vehicle batteries.

The system may have a number of different configurations, These different configurations use either a radiative cooling system or a refrigeration system for cooling, and pumping coolant, and/or a heating system including a reservoir and heater, controller, temperature sensor and thermostat for sensing the temperature of the coolant, which cooperate to appropriately control the temperature and flow rate of the coolant through the system.

Typically, the heating system is used during an initial period of charging when the temperature of the coolant is below a preset temperature limit. Depending upon the ambient temperature of the charger. coolant and vehicle, the heater may remain on during the entire charging period, or may reduce the amount of heat supplied to the coolant, or turn off, as the case may be, depending upon ambient temperature conditions. The cooling system ensures that the coolant temperature is maintained at a relatively low temperature so that the touch temperature of the cable is low enough to allow a user to touch it without discomfort. The temperature of the cable may rise from 5 to 10 degrees Celsius during charging and the use of either the radiative cooling system or refrigeration system controls the temperature of the cable in an appropriate manner. Either the radiative cooling system or the refrigeration system is employed with the system and this is dependant upon the normal ambient temperatures at the location of the system.

The transmission cable is a medium by which electric power is transferred from the power source to a vehicle charge port used for charging the propulsion batteries of the electric vehicle. The design of the cable is such that its overall size is greatly reduced to maximize cable manageability by a user. Using the direct contact cooling approach of the present invention, along with the heating and refrigeration systems to control the temperature of the coolant, cable touch temperatures are maintained at a controlled level during all weather conditions, when performing high power charging, on the order of 25-150 kw. The present invention uses a liquid coolant, such as synthetic oil, for example, that is confined in the cooling channels surrounding the conductors of the cable, and in coolant lines that couple the cable to the heating, and radiative or refrigeration cooling systems.

There is a desire to provide inductive charging apparatus that permits inductive coupling at very high charge rates. The present cable system makes such high charge rate inductive coupling practical and safer for a user, in all weather conditions.

The various features and advantages of the present invention may be more readily understood with reference to the following detailed description taken in conjunction with the accompanying drawing, wherein like reference numerals designate like structural elements, and in which;
Fig. 1 shows a diagram illustrating a plurality of transmission cable systems in accordance with the principles of the present invention;
Fig. 2 is a cross sectional view of a first embodiment of a transmission cable that may be used in the transmission cable systems of Fig. 1;
Fig. 3 is a cross sectional view of a second embodiment of a transmission cable that may be used in the transmission cable systems of Fig. 1;
Fig. 4 is a graph showing temperature of various coolants and the corresponding touch temperatures of the transmission cable used in the transmission cable systems shown in Fig. 1; and
Fig. 5 shows a typical heating and cooling profile implemented by the present invention.

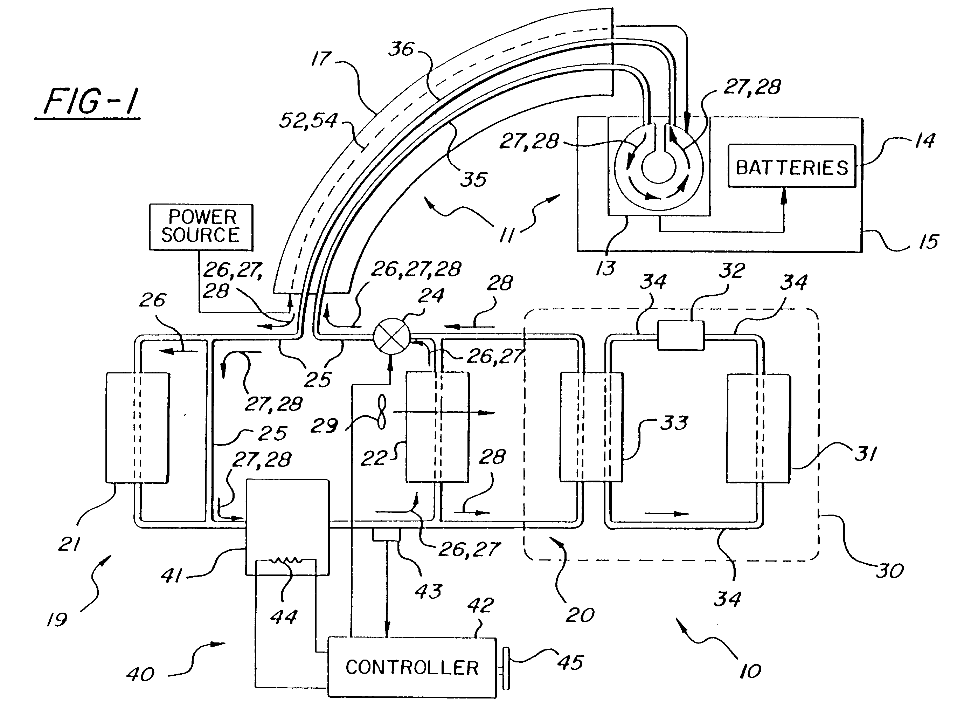

Referring to the drawing figures, Fig. 1 illustrates a plurality of transmission cable systems 10 in accordance with the principles of the present invention. The transmission cable systems 10 are shown as part of an electric vehicle inductive charging system 11. The transmission cable systems 10 include a transmission cable 17 that is a medium by which electric power is transferred from a power inverter 12 or power source 12 to a charge port 13 used for charging propulsion batteries 14 of an electric vehicle 15. The charge port 13 is part of an inductive coupler 16 that couples power to propulsion batteries 14 of the electric vehicle 15.

The present invention provides for a system 10 that may be assembled in a number of different configurations. These different configurations use either a phase-change cooling system 19, a one-phase cooling system comprising a radiative cooling system 20, or a two-phase cooling system comprising a refrigeration system 30 for cooling coolant 23. A heating system 40 may also be employed with any of the cooling systems 19, 20, 30. The use of the phase-change cooling system 19 or the two-phase cooling or refrigeration systems 20, 30 is based on the heat load rejection and required coolant inlet temperature of the cable 17. The phase-change cooling system 19 comprises a condenser 21 for cooling the coolant 23 and a pump 24 for pumping the coolant 23 through coolant lines 25 to coolant channels 35, 36 of the cable 17. A coolant flow path 26 is shown through the phase-change cooling system 19 illustrated by arrows numbered 26.

The radiative cooling system 20 and the refrigeration system 30 comprise two-phase cooling systems 20, 30. The radiative cooling system 20 comprises a radiator-type cooler 22 including a fan 29 for cooling coolant 23, the pump 24 for pumping the coolant 23, the plurality of coolant lines 25 interconnecting the cooler 22, pump 24, and coolant channels 35, 36 of the cable 17. The coolant flow path 27 through the radiative-type cooling system 20 is also illustrated by arrows numbered 27.

The refrigeration system 30 comprises a compressor 31, a condenser 32, and an evaporator 33 for cooling the coolant 23. The compressor 31, condenser 32, and evaporator 33 are connected by way of coolant lines 34. One of the coolant lines 25 is coupled through the evaporator 33 of the refrigeration system 30. While Fig. 1 shows this coolant line 25 bypassing the radiator-type cooler 22, in actual practice, the radiator-type cooler 22 is not employed at the same time as the refrigeration system 30, and therefore would not be present. Similarly, the condenser 21 would not be employed simultaneously with either the radiator-type cooler 22 or the refrigeration system 30.

The refrigeration system 30 also uses the pump 24 for pumping the coolant 23, and the plurality of coolant lines 25 that interconnect the pump 24, and coolant channels 35, 36 of the cable 17. A second coolant flow path 28 is shown for the two-phase refrigeration system 30 illustrated by arrows numbered 28. The radiator-type cooler 22 is not used when the refrigeration system 30 is used, and the coolant lines 28 that "bypass" the radiator-type cooler 22 shown in Fig. 1 are not used when the radiative-type cooling system 20 is used.

The heating system 40 includes a reservoir 41 for storing the coolant 23, a controller 42, a temperature sensor 43 that is used to sense the temperature of the coolant 23, a heating element 44 that is typically disposed in the reservoir 41 that is in contact with the coolant 23 for heating the coolant 23, and a thermostat 45 for setting the temperature of the heating element 44 based on inputs derived from the temperature sensor 43. These components appropriately control the temperature and flow rate of the coolant 23 through the system 10.

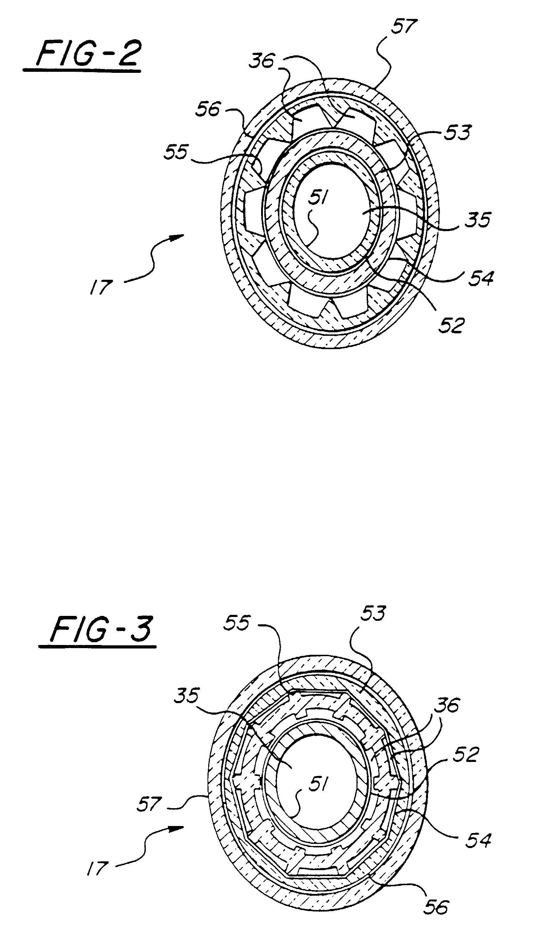

The transmission cable 17 is coupled between the cooling systems 19, 20, 30 and the charge port 13 of the inductive charging system 11, and to the power inverter 12 or power source 12 for coupling electrical power to the charge port 13. The transmission cable 17 is designed to permit the flow of coolant 23 therethrough by way of the coolant channels 35, 36 as well as conduct electrical power for charging the propulsion batteries 14 of the electric vehicle 15 by way of conductors 52, 54. Details regarding the transmission cable 17 are provided with reference to Figs. 2-4.

One of the coolant lines 25 comprises an input coolant line that is connected to an inner coolant channel 35, and a return coolant line is connected to an outer coolant channel 36, for example. Thus, coolant 23 may be pumped from the heating and cooling systems 19, 20, 30, 40 through the inner coolant channel 35 to the charge port 13 and back through the outer coolant channel 36. The heating and cooling systems 19, 20, 30, 40 and cooling channels 35, 36 thus provide a means to heat and cool the transmission cable 17, as required, when transferring electrical power, in a manner that keeps the cable flexible and touchable by a user in all temperature environments.

Fig. 2 shows a cross sectional view of a first embodiment of the transmission cable 17 that may be used in the transmission cable system 10 of Fig. 1. Coolant channels 35, 36 are provided through the transmission cable 17 the permit the flow of coolant 23 between the heating and cooling systems 19, 20, 30, 40 and the charge port 13. The transmission cable 17 is comprised of an inner coolant channel 35, which is surrounded by a first concentric dielectric layer 51. The first concentric dielectric layer 51 is surrounded by a first concentric conductor 52. The first concentric conductor 52 is surrounded by a second concentric dielectric layer 53. An outer conductor 54 is concentrically disposed around the second concentric dielectric layer 53. A plurality of outer coolant channels 36 surround the outer conductor 54 and are formed in a grooved dielectric layer 55. An outer shield 56 is concentrically disposed around the grooved dielectric layer 55 and plurality of outer coolant channels 36. An outer dielectric jacket 57 encloses the outer shield 56.

Fig. 3 shows a cross sectional view of a second embodiment of the transmission cable 17 that may be used in the system 10 of Fig. 1. The cooling channels 35, 36 of the embodiment of Fig. 3 are slightly different from those shown in Fig. 2, in that the grooved dielectric layer 55 separates the first and second conductors 52, 54. The grooved dielectric layer 55 also has a different cross sectional shape compared to the grooved dielectric layer 55 shown in Fig. 2. The coolant 23 directly contacts the inner and outer conductors 52, 54 in the embodiment of Fig. 3, whereas the coolant 23 is not in contact with the inner conductors 52 in the embodiment of Fig. 2, and heat is coupled away from the inner conductor 52 through the dielectric material comprising the first dielectric layer 51 to the inner coolant channel 35. However, the cable 17 shown in Fig. 2 is much easier and less costly to manufacture.

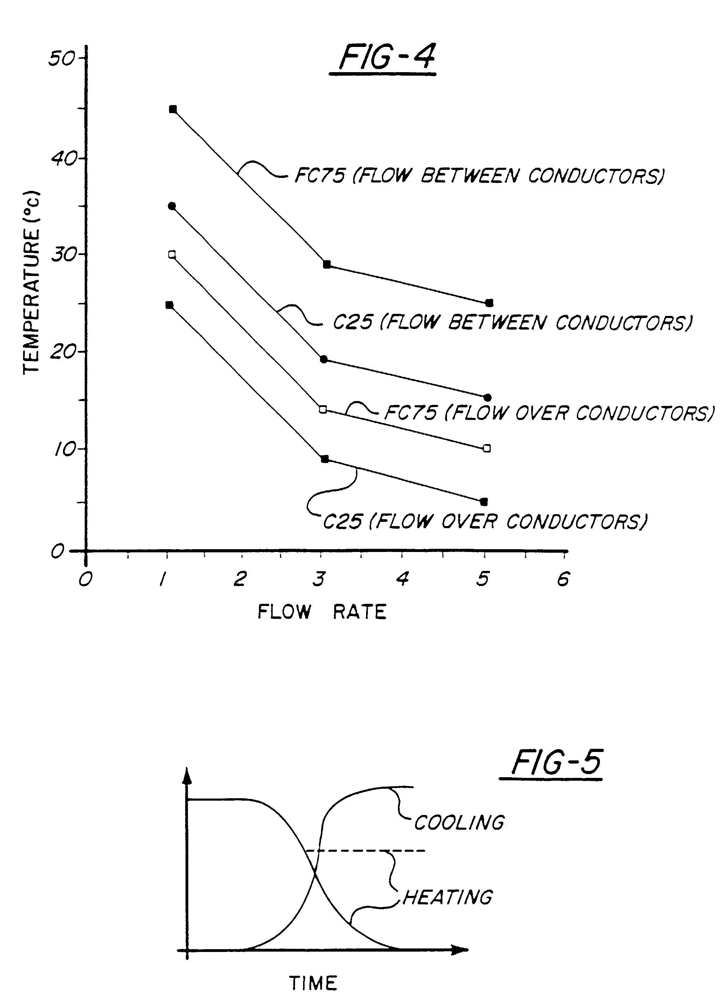

In operation, the coolant can be pumped around the conductors 52, 54 of the cable 17 shown in Figs. 2 or 3 using either the single phase or two phase cooling approach. In the single phase approach, the coolant 23 is selected to have a considerably higher boiling point than the coolant 23 is expected to experience (i.e., FC 75) and the coolant 23 is pumped past the conductors 52, 54 and cycled back through the condenser 21. Coolants such as higher boiling point flourinerts (or environmentally improved flourinert substitutes), coolanol, or PAO, can be used for this purpose. Fig. 4 is a graph showing temperature of various coolants and the corresponding touch temperatures of the transmission cable 17 used in the transmission cable system of Fig. 1. The curves shown in Fig. 4 correspond to the radiative cooling system 20.

In the two-phase approaches, the coolant 23 is formulated to boil at a particular temperature and is continually replenished as it boils when in contact with the conductors 52, 54. For example, if the selected coolant 23 has a boiling point of 70 degrees Celsius, it can be pumped over the conductors 52, 54 and allowed to boil at that temperature but not boil away completely. The coolant 23 may be replenished from a reservoir or other source at a temperature below its boiling point. By appropriately selecting the pump rate, boiling point, and condensation rate for the coolant 23, equilibrium is achieved which maintains the temperature of the conductors 52, 54 at approximately 10 degrees Celsius above the boiling point of the coolant 23.

The transmission cable 17 employs concentric tubing that forms the cooling channels 35, 36. The center cooling channel 35 carries the coolant 23 in one direction and the outer concentric cooling channels 36 carry the coolant 23 in the opposite direction, for example. The coolant 23 in the outer cooling channels 36 is a high dielectric strength coolant. This coolant 23 helps to maintain the outer touch temperature of the transmission cable 17 to an acceptable level, and also completely surrounds the outer conductor 54. The outer cooling channels 36 are between the outer shield 56 and the outer conductor 54 giving the user an extra measure of protection. Since the coolant 23 flows through the transmission cable 17, the temperature of the coolant 23 controls the temperature of the transmission cable 17. When the transmission cable 17 is not being used to charge a vehicle, the coolant 23 may be kept warm using the heating element 44 disposed in the reservoir 41 containing the cooling liquid. The healed coolant 23 may be pumped through the transmission cable 17 thus keeping the cable 17 warm. This is controlled using the thermostat 45 and controller 42 so that at higher ambient temperatures, the power provided by the heating element 44 can be reduced and/or the pump 24 slowed down or both shut down. When the transmission cable 17 is used for charging, the thermostat 45 may be overridden so that the pump 24 operates at all times during charging. The heater element 44 may be shut down during charging, depending upon the ambient temperature conditions. Fig. 5 shows a typical heating and cooling profile that may be implemented by the system 10. The two solid curves represent the amount of heating and cooling provided by the heating and cooling systems 19, 20, 30, 40 and indicate that as the cable heats up during charging, less heat is typically required along with ore cooling. The dashed curve illustrates that heating may be required at all times during charging, depending upon the ambient temperature conditions that are experienced by the cable 17 and the amount of power that is transferred.

The present transmission cable system 10 is designed to be used to charge the propulsion batteries 14 of the electric vehicle 11 at extremely high charge rates. The cable 17 is handled by a user in a manner similar to a gas hose. The present system 10 developed for use in transferring 120 Kilowatts of power at 334 Amps RMS and 75 KHz, which without adequate cooling would require a cable 17 far too large, heavy, stiff and cumbersome for the user. Furthermore, the heating system 40 used in the present system 10 permits heating of the coolant 23 in low ambient temperature environment which reduces its viscosity and allows it to easily flow through the cable 17. Also, heating of the coolant 23 helps to maintain the flexibility of the cable 17 at low temperatures by keeping the coolant 23 heated at low ambient temperatures. Cooling of the cable 17 at high outside temperatures while transferring power, by controllably cooling the coolant 23 circulating through the cable 17 permit handling by the user without undue physical discomfort.

The present cable system uses a high dielectric strength coolant 23, such as synthetic oil, for example. The dielectric properties of this type of coolant 23 allows direct contact with the conductors 32, 54 of the cable 17. Because of this, a maximum amount of heat transfer is obtained. Since the resistance of copper conductors is reduced at lower temperatures, extremely high power transmission rates can be achieved through a relatively small diameter cable 17. Conventional cables rely on large conductor diameters or surface areas to carry current at reduced temperatures. A hand held cable 17 carrying huge currents produced by a 120 Kilowatt power source 12 would not be possible, without providing substantially direct contact with the conductors 52, 54 by way of the coolant 23, The temperature of the dielectric layers in the cable 17 is controllably elevated to keep the cable 17 flexible by heating the coolant 23 in cold climates. Without this feature in cold climates, the cable 17 would be be too stiff to be useable.

Thus, there has been disclosed a new and improved environmentally controlled high power high frequency transmission cable system for use with inductive charging systems. It is to be understood that the above-described embodiment is merely illustrative of some of the many specific embodiments that represent applications of the principles of the present invention. Clearly, numerous and other arrangements can be readily devised by those skilled in the art without departing from the scope of the invention as defined by the appended claims.

## Claims

1. A transmission cable system (10) for use with an inductive charging system (11) that transfers electric power from a power source (12) to batteries (14) of an electric vehicle (15), said cable system (10) comprising:
a transmission cable (17) comprising a plurality of conductors (52, 54) electrically coupled between the power source (12) and the electric vehicle (15) for coupling electrical power to the batteries (14), characterized by
a plurality of coolant channels (35, 36) surrounding the plurality of conductors (52, 54) that permit the flow of coolant (23) therethrough;
a cooling system (19, 20, 30) and/or a heating system (40) coupled to the plurality of coolant channels (35, 36) of the transmission cable (17) for cooling and heating the coolant (23) , respectively; and
a pump (24) coupled to the cooling system (19, 20, 30) and/or to the heating system (40) and to the plurality of coolant channels (35, 36) for pumping the coolant (23) through the cooling system (19, 20, 30) and/or the heating system (40) and through transmission cable (17).

2. The system of claim 1, characterized in that the cooling system comprises a phase-change cooling system (19) comprising:
a condenser (21) for cooling the coolant (23);
the pump (24) for pumping the coolant (23); and
a plurality of coolant lines (25) interconnecting the condenser (21), the pump (24) and the plurality of coolant channels (35, 36).

3. The system of claim 1, characterized in that the cooling system comprises a one-phase cooling system (20) comprising:
a radiator-type cooler (22) for cooling the coolant (23);
the pump (24) for pumping the coolant (23); and
a plurality of coolant lines (25) interconnecting the radiator-type cooler (22), the pump (24) and the plurality of coolant channels (35, 36).

4. The system of claim 1, characterized in that the cooling system comprises a two-phase cooling system (30) comprising:
a refrigeration system (30) for cooling the coolant (23) that comprises a compressor (31), a condenser (32), and an evaporator (33) for cooling the coolant (23) interconnected by way of coolant lines (34);
the pump (24) for pumping the coolant (23); and
a plurality of coolant lines (25) interconnecting the pump (24) and the plurality of coolant channels (35, 36), and wherein one of the coolant lines (25) is coupled through the evaporator (33) of the refrigeration system (30).

5. The system of any of claims 1 - 4, characterized in that the heating system (40) comprises:
a reservoir (41) for storing the coolant (23);
a temperature sensor (43) for sensing the temperature of the coolant (23);
a heating element (44) for heating the coolant (23) ;
a thermostat (45) for setting the temperature of the heating element (44); and
a controller (42) coupled to the heating element (44), the temperature sensor (43), the thermostat (45), and the pump (24), for controlling the temperature and flow rate of the coolant (23) through the system (10).

## Patentansprüche

1. Übertragungskabelsystem (10) zur Verwendung mit einem Induktivladesystem (11), das elektrische Energie von einer Energiequelle (12) auf Batterien (14) eines Elektrofahrzeuges (15) überträgt, wobei das Kabelsystem (10) umfaßt:
ein Übertragungskabel (17), das eine Vielzahl von Leitern (52, 54) umfaßt, die elektrisch zwischen die Energiequelle (12) und das Elektrofahrzeug (15) geschaltet sind, um elektrische Energie an die Batterien (14) anzukoppeln, gekennzeichnet durch
eine Vielzahl von Kühlmittelkanälen (35, 36), welche die Vielzahl von Leitern (52, 54) umgeben und die Strömung von Kühlmittel (23) dort hindurch gestatten,
ein Kühlsystem (19, 20, 30) und/oder ein Heizsystem (40), das an die Vielzahl von Kühlmittelkanälen (35, 36) des Übertragungskabels (17) angekoppelt ist, um das Kühlmittel (23) zu kühlen bzw. zu erwärmen, und
eine Pumpe (24), die an das Kühlsystem (19, 20, 30) und/oder an das Heizsystem (40) und an die Vielzahl von Kühlmittelkanälen (35, 36) angekoppelt ist, um das Kühlmittel (23) durch das Kühlsystem (19, 20, 30) und/oder das Heizsystem (40) und durch das Übertragungskabel (17) zu pumpen.

2. System nach Anspruch 1, dadurch gekennzeichnet, daß das Kühlsystem ein Phasenänderungs-Kühlsystem (19) aufweist, umfassend:
einen Kondensator (21), um das Kühlmittel (23) zu kühlen,
die Pumpe (24), um das Kühlmittel (23) zu pumpen, und
eine Vielzahl von Kühlmittelleitungen (25), die den Kondensator (21), die Pumpe (24) und die Vielzahl von Kühlmittelkanälen (35, 36) miteinander verbinden.

3. System nach Anspruch 1, dadurch gekennzeichnet, daß das Kühlsystem ein Einphasen-Kühlsystem (20) aufweist, umfassend:
einen Kühler vom Strahlungstyp (22), um das Kühlmittel (23) zu kühlen,
die Pumpe (24), um das Kühlmittel (23) zu pumpen, und
eine Vielzahl von Kühlmittelleitungen (25), die den Kühler vom Strahlungstyp (22), die Pumpe (24) und die Vielzahl von Kühlmittelkanälen (35, 36) miteinander verbinden.

4. System nach Anspruch 1, dadurch gekennzeichnet, daß das Kühlsystem ein Zweiphasen-Kühlsystem (30) aufweist, umfassend:
ein Kälteerzeugungssystem (30), um das Kühlmittel (23) zu kühlen, das einen Verdichter (31), einen Kondensator (32) und einen Verdampfer (33) umfaßt, um das Kühlmittel (23) zu kühlen, die mittels Kühlmittelleitungen (34) miteinander verbunden sind,
die Pumpe (24), um das Kühlmittel (23) zu pumpen, und
eine Vielzahl von Kühlmittelleitungen (25), welche die Pumpe (24) und die Vielzahl von Kühlmittelkanälen (35, 36) miteinander verbinden, und wobei eine der Kühlmittelleitungen (25) durch den Verdampfer (33) des Kälteerzeugungssystems (30) angekoppelt ist.

5. System nach einem der Ansprüche 1-4, dadurch gekennzeichnet, daß das Heizsystem (40) umfaßt:
einen Behälter (41), um das Kühlmittel (23) zu speichern,
einen Temperatursensor (43), um die Temperatur des Kühlmittels (23) zu erfassen,
ein Heizelement (44), um das Kühlmittel (23) zu erwärmen,
einen Thermostat (45), um die Temperatur des Heizelements (44) einzustellen, und
einen Controller (42), der an das Heizelement (44), den Temperatursensor (43), den Thermostat (45) und die Pumpe (24) angekoppelt ist, um die Temperatur und Strömungsrate des Kühlmittels (23) durch das System (10) zu steuern.

## Revendications

1. Système (10) de câble de transmission pour une utilisation avec un système de chargeur (11) inductif qui transfère une puissance électrique d'une source (12) de puissance à des batteries (14) d'un véhicule électrique (15), ledit système (10) de câble comprenant :
un câble (17) de transmission comprenant une pluralité de conducteurs (52, 54) couplés électriquement entre la source (12) de puissance et le véhicule électrique (15) pour transmettre une puissance électrique aux batteries (14), caractérisé par
une pluralité de canaux (35, 36) de fluide caloporteur entourant la pluralité de conducteurs (52, 54) qui permettent la circulation d'un fluide caloporteur (23) à travers eux ;
un système (19, 20, 30) de refroidissement et/ou un système (40) de chauffage couplés à la pluralité de canaux (35, 36) de fluide caloporteur du câble (17) de transmission pour refroidir et réchauffer respectivement le fluide caloporteur (23) ; et
une pompe (24) couplée au système (19, 20, 30) de refroidissement et/ou au système (40) de chauffage et à la pluralité de canaux (35, 36) de fluide caloporteur pour pomper le fluide caloporteur (23) dans le système (19, 20, 30) de refroidissement et/ou le système (40) de chauffage et dans le câble (17) de transmission.

2. Système selon la revendication 1, caractérisé en ce que le système de refroidissement comprend un système (19) de refroidissement à changement de phase comprenant :
un condenseur (21) pour refroidir le fluide caloporteur (23) ;
la pompe (24) pour pomper le fluide caloporteur (23) ; et
une pluralité de conduits (25) de fluide caloporteur interconnectant le condenseur (21), la pompe (24) et la pluralité de canaux (35, 36) de fluide caloporteur.

3. Système selon la revendication 1, caractérisé en ce que le système de refroidissement comprend un système (20) de refroidissement à une phase comprenant :
un refroidisseur (22) du type radiateur, pour refroidir la fluide caloporteur (23) ;
la pompe (24) pour pomper le fluide caloporteur (23) ; et
une pluralité de conduits (25) de fluide caloporteur interconnectant le refroidisseur (22) du type radiateur, la pompe (24) et la pluralité de canaux (35, 36) de fluide caloporteur.

4. Système selon la revendication 1, caractérisé en ce que le système de refroidissement comprend un système (30) de refroidissement à deux phases comprenant :
un système (30) de réfrigération pour refroidir le fluide caloporteur (23), qui comprend un compresseur (31), un condenseur (32), et un évaporateur (33) pour refroidir le fluide caloporteur (23) interconnecté au moyen de conduits (34) de fluide caloporteur ;
la pompe (24) pour pomper le fluide caloporteur (23) ; et
une pluralité de conduits (25) de fluide caloporteur interconnectant la pompe (24) et la pluralité de canaux (35, 36) de fluide caloporteur, et dans lequel un des conduits (25) de fluide caloporteur est couplé par l'intermédiaire de l'évaporateur (33) du système (30) de réfrigération.

5. Système selon l'une quelconque des revendications 1 à 4, caractérisé en ce que le système de chauffage comprend :
un réservoir (41) pour stocker le fluide caloporteur (23) ;
un capteur (43) de température pour détecter la température du fluide caloporteur (23) ;
un élément chauffant (44) pour chauffer le fluide caloporteur (23) ;
un thermostat (45) pour fixer la température de l'élément chauffant (44) ; et
un dispositif (42) de commande couplé à l'élément chauffant (44), au capteur (43) de température, au thermostat (45) et à la pompe (24) pour commander la température et le débit du fluide caloporteur (23) dans le système (10).
